# EUROPEAN PATENT SPECIFICATION

(11) **EP 2 097 629 B1**
(45) Date of publication and mention of the grant of the patent: **26.09.2012**
(21) Application number: 08701701.8
(22) Date of filing: 02.01.2008
(51) Int. Cl.: F02B 19/10

(54) **PRE-CHAMBER ARRANGEMENT FOR A PISTON ENGINE**
VORKAMMERANORDNUNG FÜR EINEN KOLBENMOTOR
UNITÉ DE PRÉCHAMBRE DE MOTEUR À PISTONS

(30) Priority: 03.01.2007 FI 20075002
(43) Date of publication of application: 09.09.2009
(73) Proprietor: Wärtsilä Finland Oy, 65380 Vaasa (FI)
(72) Inventor: NIINIKANGAS, Saku, FI-65100 Vaasa (FI); SUNDSTEN, Magnus, FI- 65610 Korsholm (FI)
(74) Representative: Nissinen, Jyrki Antero
(86) International application number: PCT/FI2008/050001
(87) International publication number: WO 2008/081083

(56) References cited:
- EP-A- 0 480 545
- GB-A- 1 471 415
- US-A- 4 023 543
- US-A- 4 106 446
- US-I5- B 563 780

## Description

The present invention relates to a prechamber arrangement for a piston engine provided with a prechamber adaptable in the upper part of an engine cylinder.

When a mixture of fuel and air is combusted in combustion engines, nitrogen oxides (NOx) are formed. Typically, the amount of nitrogen oxides increases concurrently with the rise of combustion temperature. High top combustion temperatures, in particular, favour the formation of nitrogen oxides. Top combustion temperatures may be lowered and thereby the amount of nitrogen oxides formed during the combustion process decreased by increasing the air/fuel ratio of the fuel mixture, i.e. by using a leaner fuel mixture. Because of the lean fuel mixture the combustion may, however, be incomplete especially in piston engines, in which the cylinder diameter is large.

In order to improve the combustion efficiency some lean burn engines are provided with a prechamber, which is in connection with the combustion chamber of the cylinder. The prechamber is supplied with a richer fuel mixture, which is ignited and conveyed to the combustion chamber, whereby the leaner fuel mixture in the combustion chamber will be ignited. A prechamber is used especially in lean burn Otto-cycle engines using gas as a fuel. In these cases the prechamber is provided with a spark plug by which the richer fuel mixture is ignited. The supply of the rich fuel mixture into the prechamber is controlled by a prechamber valve according to the cycle of the engine. There is a separate valve gear for the prechamber valve controlled by the camshaft of the engine. The camshaft is provided with a separate cam for the prechamber valve. A disadvantage with this arrangement is its complexity, as the prechamber valve requires a cam, push rod and rocker arm of its own. Moreover, the lift of the prechamber valve i.e. the travelling length between the extreme positions is short, which hampers the control of the valve.

Document US 4023543 discloses an engine with a main combustion chamber and a prechamber. A prechamber valve is operated by a rocker arm for operating a main inlet valve of the main combustion chamber. A cylindrical wall is positioned downstream of the valve seat of the prechamber valve to prevent a passageway to the prechamber from being opened until the valve head of the prechamber valve has been lifted beyond a predetermined point.

US 4106446 shows a piston engine in which a prechamber valve is operated independently from an inlet valve by a hydraulic valve operating mechanism, which comprises a fluid supply device connected to a prechamber valve lifter by a fluid supply passage.

An object of the present invention is to provide an arrangement solution by means of which the operation of the prechamber valve can be improved.

The objects of the invention are achieved as disclosed in the appended claim 1. A piston engine according to the invention comprising at least one cylinder, an inlet port provided with an inlet valve for conveying-combustion air into a combustion chamber of the cylinder and an actuating arrangement for opening the inlet valve. The actuating arrangement comprises a yoke and a rocker arm arranged in conjuction with the stem of the inlet valve, by which rocker arm the yoke and thereby the inlet valve is pressed toward an open position. A prechamber arrangement is adapted in the upper art of the cylinder. The prechamber arrangement comprises a prechamber, a spring-loaded prechamber valve provided with a piston surface for feeding a mixture of combustion air and fuel into the prechamber, and ignition means for igniting mixture of combustion air and fuel in the prechamber. The prechamber valve can be moved between an open and closed position and is pressed toward the closed position by a spring: The prechamber arrangement comprises a chamber for a chamber for pressure medium and a second chamber for pressure medium in flow connection with the chamber. The chamber is delimited_by the piston surface of the prechamber valve on which piston surface the pressure of the pressure medium acts to move the prechamber valve toward the open position. The second chamber is delimited by the piston surface of a movable second piston. The prechamber arrangement comprises a duct for conveying pressure medium to the second chamber and for discharging it from the second chamber. The duct is arranged to close and open according to the position of the second piston. Further, the yoke and the rocker arm of the inlet valve are arranged to move the second piston.

Considerable advantages are achieved by the present invention.

By changing the ratio between the area of the piston surface of the prechamber valve and that of the piston surface of the second piston the lift of the prechamber valve may be changed as a function of time in a desired way. Then the prechamber valve may be operated by the same actuating arrangement as the inlet valve of the cylinder. The arrangement structure may be made simple, since a separate cam for the camshaft and a mechanism for transmitting the movement of the cam to the prechamber valve are not necessarily required.

In the following, the invention is explained more in detail, by way of example, with reference to the appended drawings.
Figures 1 - 6 show a schematic cross-sectional view of the upper part of a piston engine cylinder and one prechamber arrangement according to the invention in various operational phases.
Figure 7 shows the lift of the prechamber valve and the inlet valve as a function of time in the embodiment according to Figures 1 - 6.

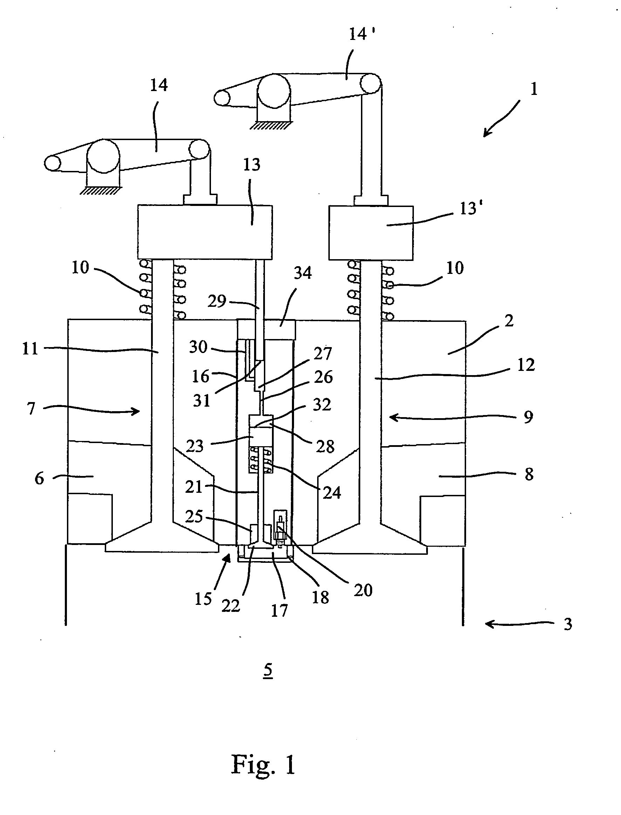

Figures 1 - 6 show a part of a piston engine 1, more specifically the upper part of its cylinder. For the sake of clarity the diagonal lines indicating the sectional areas have been omitted. The piston engine 1 comprises an engine block with a plurality of cylinders 3. The engine 1 is an Otto-cycle engine, i.e. a mixture of fuel and combustion air is ignited by a spark plug. The fuel used in the engine is gas, for instance natural gas. The engine 1 also comprises a cylinder head 2, which together with a piston and a cylinder liner defines a combustion chamber 5 of the cylinder. The cylinder head 2 is provided with an inlet port 6 which opens into the combustion chamber 5, through which inlet port the mixture of fuel and air is led into the combustion chamber 5. The fuel is mixed with combustion air in the inlet port 6. The flow of the mixture of fuel and combustion air from the inlet port 6 into the combustion chamber 5 is controlled by an inlet valve 7. The cylinder head 2 is also provided with an exhaust port 8 opening into the combustion chamber 5, through which exhaust port the exhaust gases formed during the combustion are discharged from the combustion chamber 5. The exhaust gas flow from the combustion chamber 5 to the exhaust port 8 is controlled by an exhaust valve 9.

An actuating arrangement is provided in conjunction with both the inlet valve 7 and the exhaust valve 9 for moving the valves 7, 9. The actuating arrangement for the inlet valve comprises a yoke 13 and a rocker arm 14 arranged in conjunction with the stem of the inlet valve 7, by which rocker arm the yoke 13 and thereby the inlet valve 7 is pressed downwards in order to open it. Similarly, the actuating arrangement for the exhaust valve comprises a yoke 13' and a rocker arm 14' arranged in conjunction with the stem of the exhaust valve 9, by which rocker arm the yoke 13' and thereby the exhaust valve 9 is pressed downwards in order to open it. The movement of the rocker arm 14, 14' is provided by means of the cam on the camshaft, which cam is in operational connection with the rocker arm 14, 14' either directly or indirectly via a push rod. A spring 10 is adapted around the stem 11, 12 of the valve 7, 9, the spring force of which spring urges the valve toward the closed position according to Figure 1, in which a valve disc 11', 12' is placed against the valve seat surface on the cylinder head 2.

A prechamber arrangement 15 is adapted in conjunction with the upper part of a cylinder, i.e. the cylinder head 2. The prechamber arrangement 15 comprises a body 16 enclosing a prechamber 17, which is in flow connection with the combustion chamber 5 via nozzle holes 18. The prechamber arrangement 15 comprises a prechamber valve 19, by which the feeding of the mixture of fuel and combustion air from the fuel chamber 25 inside the body to the prechamber 17 is controlled. In addition, the prechamber arrangement 15 comprises a spark plug 20, by which the mixture of fuel and air in the prechamber 17 is ignited. The prechamber arrangement is placed inside the body 16, whereby it can be installed in conjunction with the cylinder head 2 as one unit.

The prechamber valve 19 comprises an elongated valve body 21, the first end of which is provided with a valve disc 22 and the second end with a piston 23. The piston 23 is placed within a cylindrical chamber 28. The piston 23 comprises a piston surface 32 delimiting the chamber 28. The valve body 21 is surrounded by a spring 24, which is arranged in the chamber 28 between the piston 23 and the body 16, whereby the spring forces the prechamber valve 19 toward the closed position in which the valve disc 22 is against the seat surface on the body 16. When the prechamber valve is in the closed position, the flow of the mixture of fuel and combustion air from the fuel chamber 25 to the prechamber 17 is prevented. When there is a gap between the seat surface and the valve disc 22, the prechamber valve 19 is open, whereby the mixture of fuel and combustion air is allowed to flow from the fuel chamber 25 to the prechamber 17.

The chamber 28 is in flow connection via a connecting duct 26 to a second chamber 27, which encloses a second piston 29. The movable second piston 29 is provided with a second piston surface 31 which delimits partially the second chamber 27. Both the chamber 28 and the second chamber 27 are filled with pressure medium, preferably with lubrication oil of the engine. The area of the second piston surface 31 is larger than that of the piston surface 32. There is a duct 30 inside the body 16 extending from the side wall of the second chamber 27 to an oil space 34, for instance to a lubrication oil channel in the cylinder head 2. The yoke 13 in conjunction with the inlet valve 7 is also in operational connection with the second piston 29 so that the yoke 13 presses simultaneously both the inlet valve 7 and the second piston 29. Thus, the movement of both the prechamber valve 19 and the inlet valve 7 is provided by the same arrangement, i.e. by the actuating arrangement of the inlet valve. The timing of the inlet valve 7 is different from that of the prechamber valve 19, i.e. their opening and closing times differ from one another. Since the areas of the piston surfaces 32, 31 delimiting the chamber 28 and the second chamber 27, respectively, are of different sizes, the movement speed and lift of the prechamber valve 19 and those of the inlet valve 7 differ from one another.

In Figure 1 both the inlet valve 7 and the exhaust valve 9 are closed, i.e. in their uppermost position against the valve seat surface on the cylinder head 2. Also the second piston 29 is in its uppermost position, whereby the volume of the second chamber 27 is at its largest. The orifice of the duct 30 in the side wall of the second chamber 27 is open, whereby the lubrication oil used as a pressure medium is allowed to flow via the duct 30 into the oil space 34.

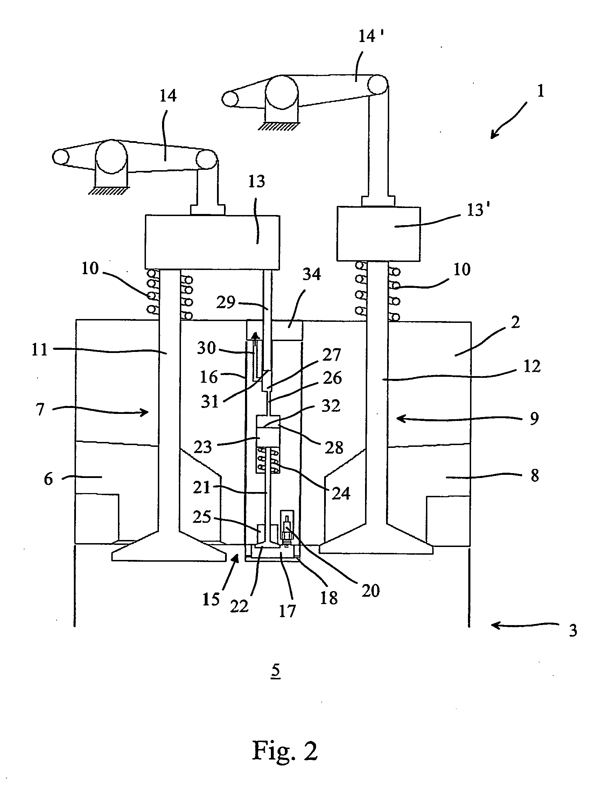

In Figure 2 the inlet valve 7 and the second piston 29 are pressed downwards by means of the actuating arrangement of the inlet valve, i.e. by the yoke 13 and the rocker arm 14. The inlet valve 7 opens and the orifice of the duct 30 in the side wall of the second chamber 27 is still open. The second piston 29 projects into the second chamber 27 and pressure medium flows along the duct 30 into the oil space 34. Consequently, the total volume of the chamber 23 and the second chamber 27 decreases. The prechamber valve 19 remains in the closed position, i.e. the valve disk 22 is against the valve seat surface.

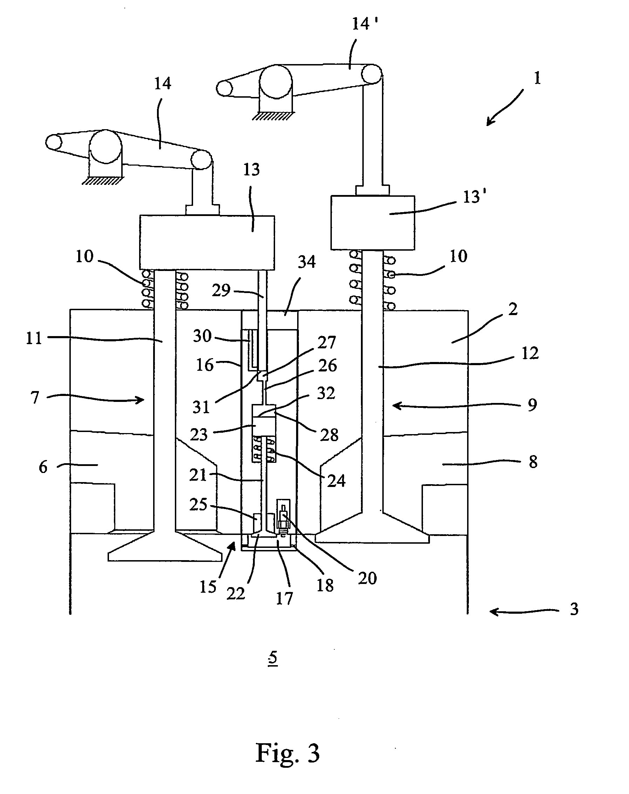

In Figure 3 the inlet valve 7 and the second piston 29 are pressed further downwards by means of the yoke 13 and the push rod 14. Then the inlet valve 7 opens further and the second piston 29 projects deeper into the second chamber 27. When the second piston 29 covers the orifice of the duct 30 opening to the side wall of the second chamber 27, pressure medium is no longer allowed to flow away from the chamber 28, 27 via the duct 30. As the second piston 29 projects deeper into the second chamber 27, the pressure of the lubrication oil in the chamber 27, 28 rises and the prechamber valve 19 starts to open, when the pressure force acting onto the piston surface 32 of the piston exceeds the closing force of the spring 24.

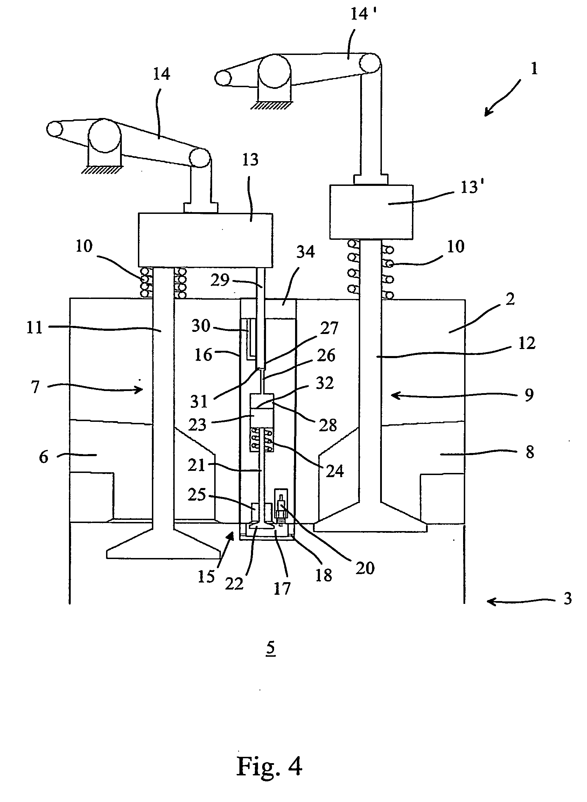

In Figure 4 both the inlet valve 7 and the second piston 29 are pressed further downwards by means of the yoke 13 and the push rod 14. The second piston 29 still covers the orifice of the duct 30. The second piston 29 projecting deeper into the second chamber 27 pushes pressure medium from the second chamber 27 via the connecting duct 26 into the chamber 28. Consequently, the piston 23 moves downwards in the chamber 28 and compresses the spring 24, whereby the prechamber valve 19 opens and fuel mixture flows from the fuel chamber 25 into the prechamber 17. Since the area of the piston surface 31 of the second piston is smaller than that of the piston surface 32, the movement of the prechamber valve 19 is slower and the lift is smaller in comparison with the movement of the second piston 29, inlet valve 7 and yoke 13.

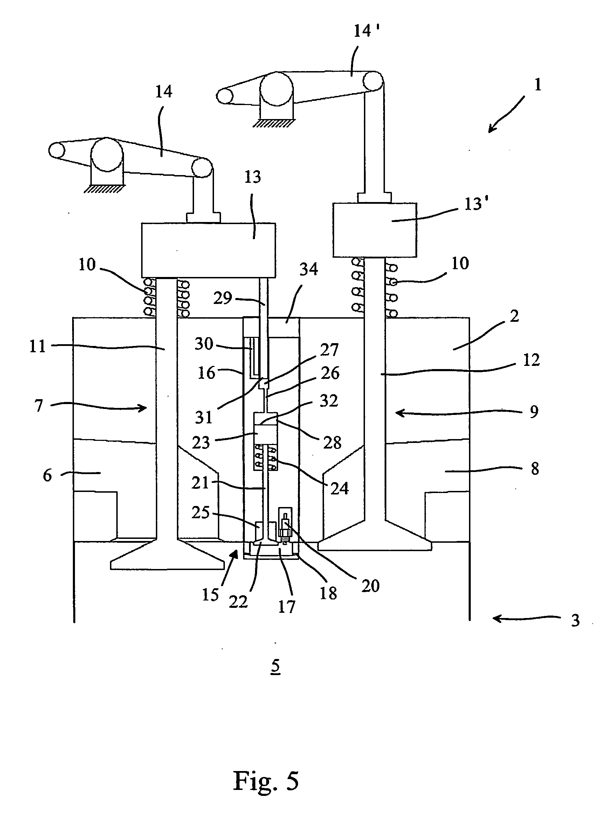

In Figure 5 the yoke 13 and the rocker arm 14 move upwards and the inlet valve 7 and the prechamber valve 19 close. In the same way as during the opening movement, the prechamber valve 19 moves slower than the inlet valve 7 due to the area difference between the piston surfaces 32, 31 of the piston 23 and the second piston 29, respectively.

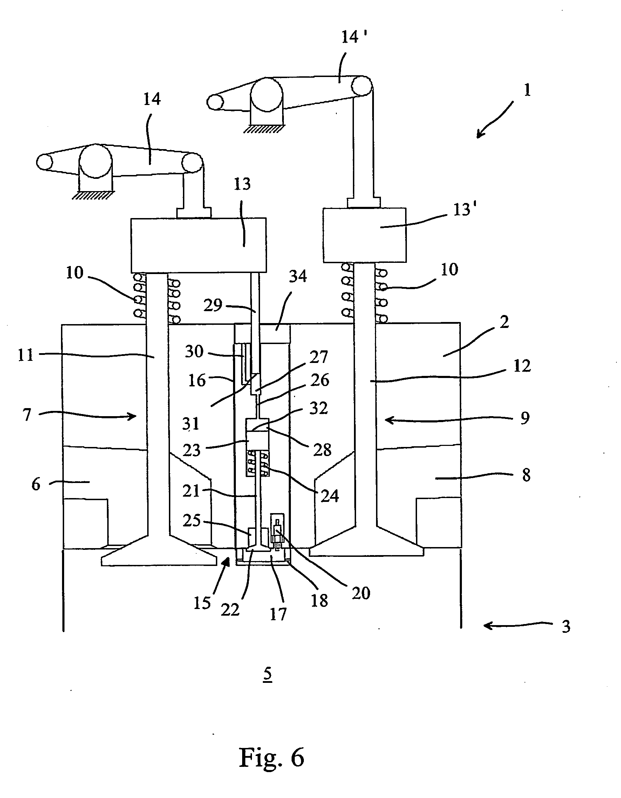

In Figure 6 the orifice of the duct 30 in the side wall of the second chamber 27 opens and pressure medium flows from the chambers 27, 28 via the duct 30 into the oil space 34. The pressure of the lubrication oil in the chambers 27, 28 drops and the spring 24 moves the prechamber valve 19 to the closed position, whereby the flow of the mixture of combustion air and fuel from the fuel chamber 25 to the prechamber 17 stops. After the inlet valve 7 has closed, the mixture in the prechamber 17 is ignited by the spark plug 20. The combusting fuel mixture is spread from the prechamber 17 through the nozzle holes 18 into the combustion chamber 5 and it ignites the leaner mixture of combustion air and fuel in the combustion chamber 5.

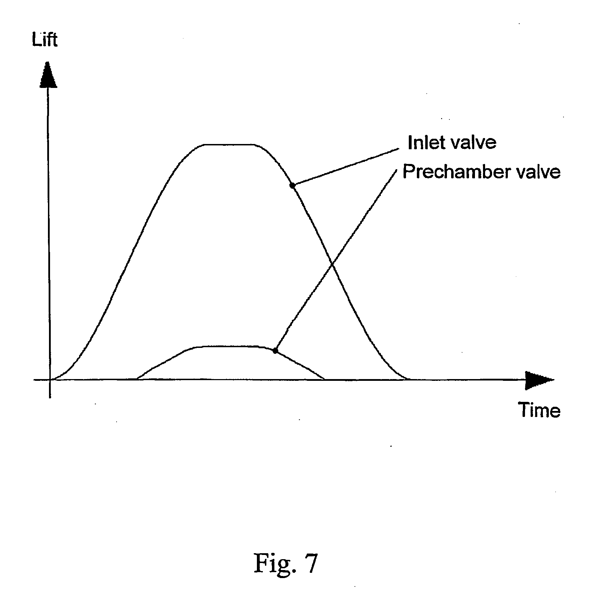

The movement, i.e. the lift, of the prechamber valve 19 as a function of time is smaller than the lift of the inlet valve 7, as indicated in Figure 7. The lift of the prechamber valve 19 relative to the lift of the inlet valve 7 can be changed by changing the ratio between the piston surface 32 of the piston and the piston surface 31 of the second piston. The moments when the prechamber valve 19 starts to open and closes completely may be changed by changing the closing and opening moments of the orifice of the duct 30 in the side wall of the second chamber 27, i.e. by changing for instance the position of the orifice of the duct 30 in the direction of motion of the second piston 29, i.e. in the vertical direction.

## Claims

1. A piston engine (1) comprising at least one cylinder (3), an inlet port (6) provided with an inlet valve (7) for conveying combustion air into a combustion chamber (5) of the cylinder, and an actuating arrangement (13, 14) for opening the inlet valve (7), the actuating arrangement comprising a yoke (13) and a rocker arm (14) arranged in conjuction with the stem of the inlet valve (7), by which rocker arm (14) the yoke (13) and thereby the inlet valve (7) is pressed toward an open position,
a prechamber arrangement adapted in the upper part (2) of the cylinder, the prechamber arrangement comprising a prechamber (17), a spring-loaded prechamber valve (19) provided with a piston surface (32) for feeding a mixture of combustion air and fuel into the prechamber (17), and ignition means (20) for igniting the mixture of combustion air and fuel in the prechamber (17), which prechamber valve (19) can be moved between an open and closed position and which is pressed toward the closed position by a spring (24), the prechamber arrangement (15) comprising a chamber (28) for pressure medium and a second chamber (27) for pressure medium in flow connection with the chamber (28), which chamber (28) is delimited by the piston surface (32) of the prechamber valve on which piston surface the pressure of the pressure medium acts to move the prechamber valve (19) toward the open position, and which second chamber (27) is delimited by the piston surface (31) of a movable second piston (29), **characterised in that** the prechamber arrangement comprises a duct (30) for conveying pressure medium to the second chamber (27) and for discharging it from the second chamber (27), which duct (30) is arranged to close and open according to the position of the second piston (29), and that the yoke (13) and the rocker arm (14) of the inlet valve are arranged to move the second piston (29).

2. A piston engine according to claim 1, **characterised in that** the area of the piston surface (32) of the prechamber valve is larger than the area of the piston surface (31) of the second piston (29).

3. A piston engine according to claim 1, **characterised in that** the orifice of the duct (30) is arranged in the side wall of the second chamber (27).

4. A piston engine according anyone of the preceding claims, **characterised in that** the chamber (28) and the second chamber (27) are adapted inside a body (16), and that the second piston (29) can be moved from outside the body (16).

5. A piston engine according to claim 1 or 3, **characterised in that** a duct (30) is in flow connection with the lubrication oil system of the engine.

6. A piston engine according to any preceding claim, **characterised in that** the yoke (13) is in operational connection with the second piston (29) so that the yoke (13) presses simultaneously both the inlet valve (7) and the second piston (29).

## Patentansprüche

1. Kolbenmotor (1), umfassend zumindest einen Zylinder (3), eine Einlassöffnung (6), die mit einem Einlassventil (7) versehen ist, um Verbrennungsluft in eine Verbrennungskammer (5) des Zylinders zu führen, und eine Betätigungsanordnung (13, 14) um das Einlassventil (7) zu öffnen, wobei die Betätigungsanordnung ein Joch (13) und einen Kipphebel (14) umfasst, die in Verbindung mit dem Schaft des Einlassventils (7) eingerichtet sind, wobei das Joch (13) und dadurch das Einlassventil (7) durch den Kipphebel (14) in eine offene Stellung gepresst wird,
wobei in dem oberen Teil (2) des Zylinders eine Vorkammeranordnung eingerichtet ist, wobei die Vorkammeranordnung eine Vorkammer (17), ein mit einer Kolbenfläche (32) versehenes federbelastetes Vorkammerventil (19), um ein Gemisch aus Verbrennungsluft und Kraftstoff in die Vorkammer (17) zu führen, und ein Zündmittel (20) zum Zünden des Gemischs aus der Verbrennungsluft und dem Kraftstoff in der Vorkammer (17) umfasst, wobei das Vorkammerventil (19) zwischen einer offenen und einer geschlossenen Stellung bewegt werden kann und durch eine Feder (24) in die geschlossene Stellung gepresst wird, wobei die Vorkammeranordnung (15) eine Kammer (28) für ein Druckmedium und eine zweite Kammer (27) für ein Druckmedium in einer Fließverbindung mit der Kammer (28) umfasst, wobei die Kammer (28) durch die Kolbenfläche (32) des Vorkammerventils begrenzt ist, wobei der Druck des Druckmediums auf die Kolbenfläche wirkt, um das Vorkammerventil (19) in die offene Stellung zu bewegen, und wobei die zweite Kammer (27) durch die Kolbenfläche (31) eines beweglichen zweiten Kolbens (29) begrenzt ist, **dadurch gekennzeichnet, dass** die Vorkammeranordnung einen Kanal (30) umfasst, um Druckmedium zu der zweiten Kammer (27) zu befördern und um es aus der zweiten Kammer (27) abzulassen, wobei der Kanal (30) so eingerichtet ist, dass er sich je nach der Position des zweiten Kolbens (29) öffnet und schließt, und dass das Joch (13) und der Kipphebel (14) des Einlassventils dazu eingerichtet sind, den zweiten Kolben (29) zu bewegen.

2. Kolbenmotor nach Anspruch 1, **dadurch gekennzeichnet, dass** der Flächeninhalt der Kolbenfläche (32) des Vorkammerventils größer als der Flächeninhalt der Kolbenfläche (31) des zweiten Kolbens (29) ist.

3. Kolbenmotor nach Anspruch 1, **dadurch gekennzeichnet, dass** die Öffnung des Kanals (30) in der Seitenwand der zweiten Kammer (27) eingerichtet ist.

4. Kolbenmotor nach einem der vorhergehenden Ansprüche, **dadurch gekennzeichnet, dass** die Kammer (28) und die zweite Kammer (27) in dem Inneren eines Körpers (16) eingerichtet sind, und dass der zweite Kolben (29) von außerhalb des Körpers (16) bewegt werden kann.

5. Kolbenmotor nach Anspruch 1 oder 3, **dadurch gekennzeichnet, dass** ein Kanal (30) in einer Fließverbindung mit dem Schmierölsystem des Motors steht.

6. Kolbenmotor nach einem der vorhergehenden Ansprüche, **dadurch gekennzeichnet, dass** das Joch (13) so in einer betrieblichen Verbindung mit dem zweiten Kolben (29) steht, dass das Joch (13) gleichzeitig sowohl das Einlassventil (7) als auch den zweiten Kolben (29) presst.

## Revendications

1. Moteur à pistons (1) comprenant au moins un cylindre (3), un port d'entrée (6) doté d'une soupape d'entrée (7) pour transporter de l'air de combustion dans une chambre de combustion (5) du cylindre, et un agencement d'actionnement (13, 14) pour ouvrir la soupape d'entrée (7), l'agencement d'actionnement comprenant une fourche (13) et un culbuteur (14) agencés en liaison avec la tige de la soupape d'entrée (7), par lequel culbuteur (14), la fourche (13) et par conséquent la soupape d'entrée (7), est appuyée vers une position ouverte,
un agencement de préchambre adapté dans la partie supérieure (2) du cylindre, l'agencement de préchambre comprenant une préchambre (17), une soupape de préchambre contrainte par ressort (19) dotée d'une surface de piston (32) pour alimenter un mélange d'air de combustion et de carburant dans la préchambre (17), et un moyen d'allumage (20) pour allumer le mélange d'air de combustion et de carburant dans la préchambre (17), laquelle soupape de préchambre (19) peut être déplacée entre une position ouverte et une position fermée et est appuyée vers la position fermée par un ressort (24), l'agencement de préchambre (15) comprenant une chambre (28) pour du fluide de pression et une seconde chambre (27) pour du fluide de pression en connexion fluidique avec la chambre (28), laquelle chambre (28) est délimitée par la surface de piston (32) de la soupape de préchambre sur laquelle surface de piston, la pression du fluide de pression agit pour déplacer la soupape de préchambre (19) vers la position ouverte, et laquelle seconde chambre (27) est délimitée par la surface de piston (31) d'un second piston mobile (29), **caractérisé en ce que** l'agencement de préchambre comprend une conduite (30) pour transporter du fluide de pression vers la seconde chambre (27) et pour le décharger de la seconde chambre (27), laquelle conduite (30) est agencée pour se fermer et s'ouvrir selon la position du second piston (29), et **en ce que** la fourche (13) et le culbuteur (14) de la soupape d'entrée sont agencés pour déplacer le second piston (29).

2. Moteur à pistons selon la revendication 1, **caractérisé en ce que** l'aire de la surface de piston (32) de la soupape de préchambre est supérieure à l'aire de la surface de piston (31) du second piston (29).

3. Moteur à pistons selon la revendication 1, **caractérisé en ce que** l'orifice de la conduite (30) est agencé dans la paroi latérale de la seconde chambre (27).

4. Moteur selon l'une quelconque des revendications précédentes, **caractérisé en ce que** la chambre (28) et la seconde chambre (27) sont adaptées à l'intérieur d'un corps (16) et que le second piston (29) peut être déplacé de l'extérieur du corps (16).

5. Moteur à pistons selon la revendication 1 ou 3, **caractérisé en ce qu'**une conduite (30) est en connexion fluidique avec le système d'huile lubrifiante du moteur.

6. Moteur selon l'une quelconque des revendications précédentes, **caractérisé en ce que** la fourche (13) est en connexion opérationnelle avec le second piston (29), de façon à ce que la fourche (13) appuie simultanément à la fois la soupape d'entrée (7) et le second piston (29).
